# EUROPEAN PATENT SPECIFICATION

(11) **EP 2 236 443 B1**
(45) Date of publication and mention of the grant of the patent: **22.02.2012**
(21) Application number: 09179605.2
(22) Date of filing: 17.12.2009
(51) Int. Cl.: B65G 57/18

(54) **Transfer apparatus and method for operating the transfer apparatus**
Übertragungsvorrichtung und Verfahren zum Betreiben der Übertragungsvorrichtung
Appareil de transfert et procédé de fonctionnement de l'appareil de transfert

(30) Priority: 15.01.2009 FI 20095032
(43) Date of publication of application: 06.10.2010
(73) Proprietor: Heinolan Sahakoneet OY, 18101 Heinola (FI)
(72) Inventor: Mäkinen, Osmo, FI-18100, Heinola (FI)
(74) Representative: Tanhua, Pekka Vilhelm

(56) References cited:
- DE-A1- 2 452 144
- FI-B- 64 785
- US-A- 4 201 506
- US-A1- 2007 140 824

## Description

The invention relates to a transfer apparatus as set forth in the preamble of claim 1 for carrying sawn timbers or similar pieces. Such an apparatus is known from DE-A-2452144.

The invention relates also to a method as set forth in the preamble of claim 8 for operating the transfer apparatus.

Prior known from the documents FI-42188, FI-64785, DE-2452144 and US-4201506 is a transfer apparatus for sawn timbers, including a transfer fork which comprises a set of adjacent spaced-apart carrier arms and means for working the transfer fork back and forth in a longitudinal direction of the carrier arms from a first position to a second position and back. The transfer fork is used for moving one or more parallel sawn timbers from a first position, from a feed conveyor or the like, to a second position for a bundle or package. Each transfer fork comprises at least two substantially straight surfaces lengthwise of the carrier arm, which in a lateral direction are at an angle relative to each other and which are at unequal distances from a rotation axis. As for these surfaces, the first one is slick and preferably flat and the second one is a rough or the like friction surface. The transfer fork is provided with a rotating device, by means of which the carrier arms are rotatable in a plane transverse to the longitudinal axis. The carrier arms are brought from the first position to the second position with the first surface facing upwards. In the first position, with an appropriate number of sawn timbers on the feed conveyor, the carrier arms are rotated relative to the longitudinal axis in such a way that the second surface faces upwards, whereby the discussed sawn timbers proceed from the feed conveyor to being supported by the carrier arms. This is followed by executing a passage of the discussed sawn timbers from the first position to the second position by means of the transfer fork, after which the carrier arms are rotated in such a way that the first surface again faces upwards. Now, the transfer fork is moved back to the first position. As a result, the sawn timbers are left behind as a top tier in a pile or bundle of sawn timbers in the second position, because the carrier arms, by virtue of an upturned slick surface thereof, are able to slide easily out of the unfinished pile of sawn timbers and to leave the sawn timbers, which have been delivered to the second position upon the carrier arms, on top of this pile.

The foregoing transfer apparatus has one serious problem. The parallel sawn timbers to be delivered to a package or bundle are generally of equal length and, in addition, often of a length desired by the customer. The sawn timbers extend in a tier and thus in a package of sawn timbers from end to end. As a result, one of the ends of sawn timbers in a timber tier may find itself exactly in coincidence with or in the proximity of one of the carrier arms. On the other hand, the sawn timbers may also be unequal in length, having among themselves sawn timbers that are shorter than an intended bundle. One of the sawn timbers in a sawn timber tier may extend from one end of the sawn timber tier or package to the coincidence with or to the proximity of one of the carrier arms. When, in the above-discussed situation, the transfer fork has its carrier arms rotated in the first position by the rotating device to have the second surface upwards, said carrier arm encounters the end of one or more sawn timbers and may dislodge it from its position. This does not generally cause problems. However, the situation is different when a transfer passage has been executed and the transfer fork has its carrier arms rotated in the second position in such a way that the first surface again faces upwards. In the rotating process, as one of the surfaces of a carrier arm is rotated arcuately downwards, the carrier arm encounters the end of one or more sawn timbers in coincidence therewith and begins to urge the sawn timber/timbers towards the other end of the sawn timber, the sawn timber tier and the package, said end being provided with an appropriate fence. Hence, a compression stress in the sawn timber/timbers increases and, at some point, the stress discharges with a result that the sawn timber/timbers is/are flung in any direction from between the carrier arm and the fence with a great force. In this flinging action, the sawn timber/timbers is/are easily thrown at least partially crosswise on top of other parallel sawn timbers, or all transfer-bound sawn timbers are stirred up in a sawn timber tier with the timbers being tossed around and climbing at least partly on top of each other. As a result of this, the transfer apparatus must have its operation aborted and the sawn timber or timbers must be removed from an intended package or re-organized manually in a parallel relationship for an appropriate tier.

An object of the invention is to eliminate the problem associated with prior known transfer devices of the above type. It is also an object of the invention to provide a new improved transfer apparatus, which is trouble-free in terms of its function, efficient, and simple in terms of its design.

A transfer apparatus of the invention is characterized by what is presented in claim 1. The dependent claims disclose preferred embodiments for a transfer apparatus of the invention.

A method of the invention for operating the transfer apparatus is characterized by what is presented in claim 8.

The invention relates to a transfer apparatus for carrying sawn timbers or similar pieces, said transfer apparatus including a transfer fork which comprises a set of adjacent spaced-apart carrier arms and means for working the transfer fork in a longitudinal direction of the carrier arms from a first position to a second position and back, said transfer fork enabling one or more parallel sawn timbers to be carried from a first position, from a feed conveyor or the like, to a second position, and the carrier arms of said transfer fork being rotatable in a plane transverse to the longitudinal direction and comprising at least two substantially straight surfaces co-directional with the carrier arm, which in a lateral direction are at an angle relative to each other, and of said surfaces the first one is slick and the second one is rough and at least some of the transfer fork's carrier arms are equipped with an independent rotating device designated therefor. According to the invention, a particular carrier arm is rotatable in a plane transverse to the longitudinal direction independently of other carrier arms. and the transfer fork is provided with one or more measuring sensors for detecting the position of an end of the sawn timber included in a transfer-bound set of sawn timbers in relation to the location of each carrier arm, said information received from the measuring sensor being used for controlling the rotating function of the carrier arms which are provided with the independent rotating devices.

The invention relates also to a method for operating a transfer apparatus, said transfer apparatus being intended for carrying sawn timbers or similar pieces, said transfer apparatus including a transfer fork which comprises a set of adjacent spaced-apart carrier arms, and in which apparatus the transfer fork is worked in a longitudinal direction of the carrier arms from a first position to a second position and back, said transfer fork enabling one or more parallel sawn timbers to be carried from a first position, from a feed conveyor or the like, to a second position, and the carrier arms of said transfer fork being rotatable in a plane transverse to the longitudinal direction and comprising at least two substantially straight surfaces co-directional with the carrier arm, which in a lateral direction are at an angle relative to each other, and of said surfaces the first one is slick and the second one is rough. According to the invention, at least some of the transfer fork's carrier arms are adapted to be rotated by independent rotating devices, such that a carrier arm is rotatable in a plane transverse to the longitudinal direction independently of other carrier arms and the transfer fork is being equipped with one or more measuring sensors for detecting the position of an end of the sawn timber included in a transfer-bound set of sawn timbers in relation to the location of each carrier arm, said information received from the measuring sensor being used for controlling the rotating function of the carrier arms which are provided with the independent rotating devices.

The basic idea for a transfer apparatus and method of the invention is that at least some the transfer fork's carrier arms are independently operable regardless of other carrier arms.

In a preferred embodiment of the invention, at least some of the transfer fork's carrier arms are independently rotatable regardless of other carrier arms in a plane transverse to the longitudinal direction from a basic position - i.e. with the first slick surface facing upwards - to a working position - i.e. with the second rough surface facing upwards - or omissible from being rotated, depending on whether or not the end of a transfer-bound set of sawn timbers or one or more sawn timbers is in coincidence with the location of this particular carrier arm. In the event that the end of a sawn timber is in coincidence with the location of a carrier arm, the carrier arm shall not be rotated from the basic position to the working position but, instead, is most preferably left in the basic position. In the event that the sawn timber extends clearly beyond a carrier arm and, thus, the sawn timber has its end outside the location of this carrier arm, the carrier arm shall be rotated from the basic position to the working position.

In an optional embodiment of the invention, at least some of the transfer fork's carrier arms are independently workable regardless of other carrier arms. In this case, a carrier arm is allowable to remain stationary in a first position, this particular carrier arm being neither moved nor used at all for the transfer of sawn timbers from the first position to a second position and to a package or the like. Such a carrier arm is left passive at its place whenever the end of a transfer-bound set (i.e. one or more) of sawn timbers is in coincidence with the location of this carrier arm. A transfer of the set of sawn timbers is performed by means of other such carrier arms, beyond which the sawn timbers extend and which are thus deployed as appropriate.

In the above-described embodiment of the invention, each of the transfer fork's carrier arms (or at least some of the carrier arms) is provided with its own specific conveyor, by which the carrier arms are worked in a longitudinal direction of the carrier arms from a first position to a second position and back. In an optional embodiment, at least some of the carrier arms are provided with a joint conveyor and, most preferably in association with each carrier arm, with a decoupling device, by which the carrier arm can be released from participating in the conveyor-induced motion from a first position to a second position and back, or, as necessary, can be joined in the conveyor motion for effecting a passage between these positions.

A benefit of the invention is that a set of sawn timbers to be transferred, particularly side-by-side timbers, remains in good order in all stages of the passage from a first position to a second position.

Another benefit of the invention is that the transfer apparatus can have its rate of speed increased, because a major source of trouble has been successfully eliminated by means of the invention.

The invention and other benefits thereof will now be described in more detail with reference to the accompanying drawing, in which
- fig. 1: shows schematically a transfer apparatus of the invention in a plan view;

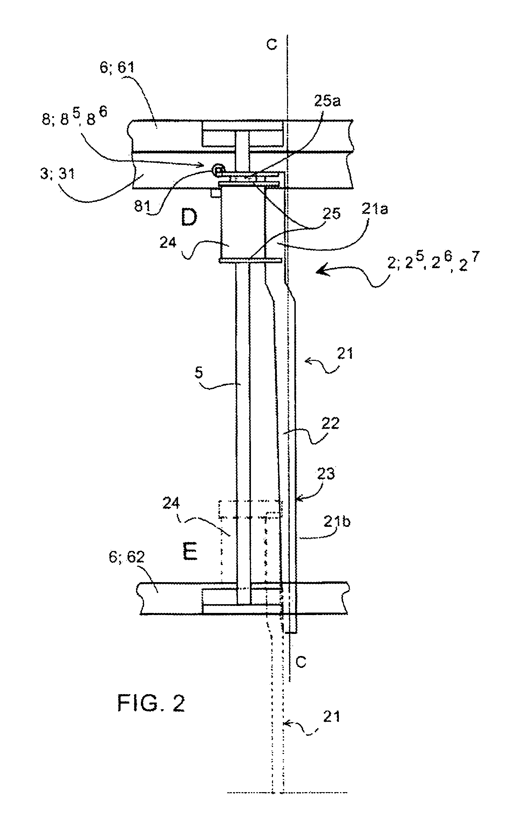

- fig. 2: shows one carrier arm in the transfer apparatus of fig. 1 in ain enlarged plan view;
- fig. 3: shows a detail A-A in the transfer apparatus of fig. 1 in an enlarged side view, wherein, for the sake of clarity, the carrier arm is sketched both in a first position D and in a second position E, although in reality the carrier arm is only present at either one of the positions;

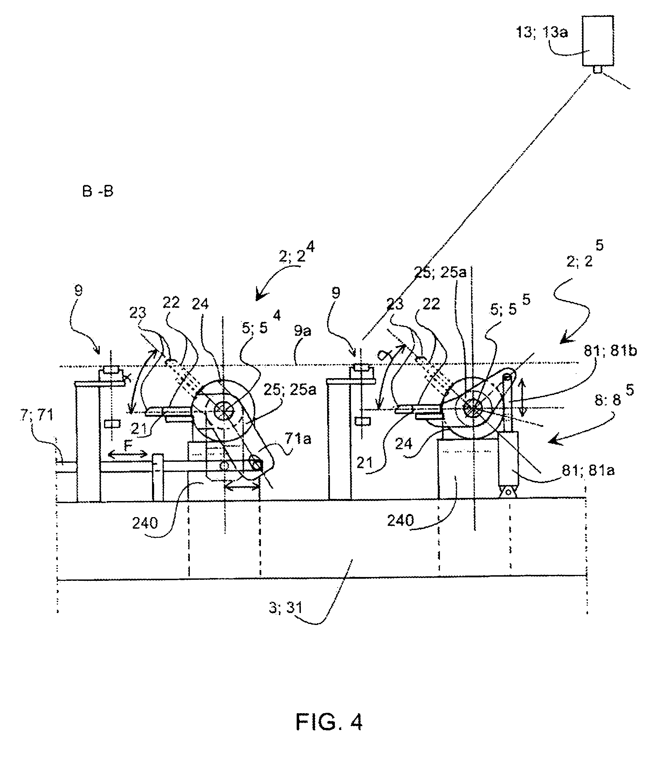

- fig. 4: shows a detail B-B in the transfer apparatus of fig. 1 in an enlarged side view, illustrating two side-by-side carrier arms as visualized from one end thereof;
- fig. 5: shows schematically a second transfer apparatus of the invention in a plan view; and
- fig. 6: shows schematically a third transfer apparatus of the invention in a plan view.

In the figures, like elements are indicated by like reference numerals.

The invention relates to a transfer apparatus for carrying pieces of sawn goods or timbers. The transfer apparatus is also apt for carrying other similar pieces, such as elongated straight pieces most preferably with a substantially square or rectangular cross-section.

The transfer apparatus according to the invention includes a transfer fork 1, which comprises a set of adjacent spaced-apart carrier arms 2; 2¹, 2²,..., 2⁶, 2⁷. The carrier arms 2 are mounted on the transfer fork 1 in a common plane at appropriate distances that can be unequal. The transfer apparatus further comprises a drive unit 4 for working the transfer fork back and forth in a longitudinal direction C-C of the carrier arms between two positions, i.e. a first position D and a second position E.

Each carrier arm 2; 2¹, 2²,..., 2⁶, 2⁷ is movably mounted on a guide bar 5; 5¹, 5²,..., 5⁶, 5⁷ extending in the longitudinal direction C-C of a relevant carrier arm, such that all carrier arms 2 of the transfer fork 1 are enabled to move along the guide bars 5 over an appropriate traveling distance between their front ends and rear ends, as well as concurrently between the first position D and the second position E. The guide bars 5; 5¹, 5²,..., 5⁶, 5⁷ are secured by their ends to a structural frame 6 of the transfer apparatus, such as to crosswise beams 61, 62 of the structural frame.

Each carrier arm 2; 2¹, 2²,..., 2⁶, 2⁷ comprises an arm block 24, by means of which the carrier arm is adapted to be movably supported by the guide bar 5. In addition, each carrier arm 2 of the transfer fork 1 comprises an elongated shaft member 21, which is connected to the arm block 24.

A feed conveyor 9 is arranged in connection with the transfer apparatus and especially with its delivery fork 1 and carrier arms 2; 2¹, 2²,..., 2⁶. Sawn timbers T are brought crosswise relative to their transfer direction by the feed conveyor 9 onto the delivery fork 1. In addition, each sawn timber T is transferred, preferably by means of an actuator-driven transverse roller assembly 11 or the like longitudinal conveyor, against an end fence 12 flanking the feed conveyor 9. A set of sawn timbers TJ1 comprises one or preferably several sawn timbers T, which are gathered preferably side by side to the proximity of each other at a second end of the feed conveyor 9, e.g. against a suitable stopper 14, in alignment with the delivery fork 1. At this time, the set of sawn timbers TJ1 is in the first position D and set up in such a way that the first ends thereof lie in a common vertical plane against the end fence 12. The set of sawn timbers TJ1 is carried by means of the transfer apparatus, specifically by means of its transfer fork 1 and carrier arms 2; 2¹, 2²,..., 2⁶ from the first position D to the second position E, which latter is in turn provided with a suitable support or the like for a pile or package P to be constructed from the sawn timers T and sets of sawn timbers TJ2.

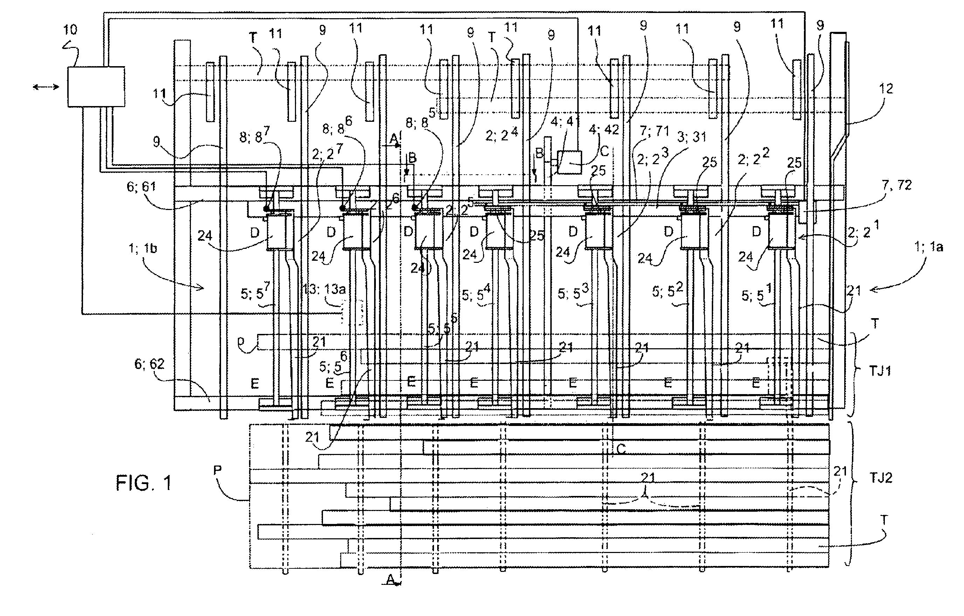

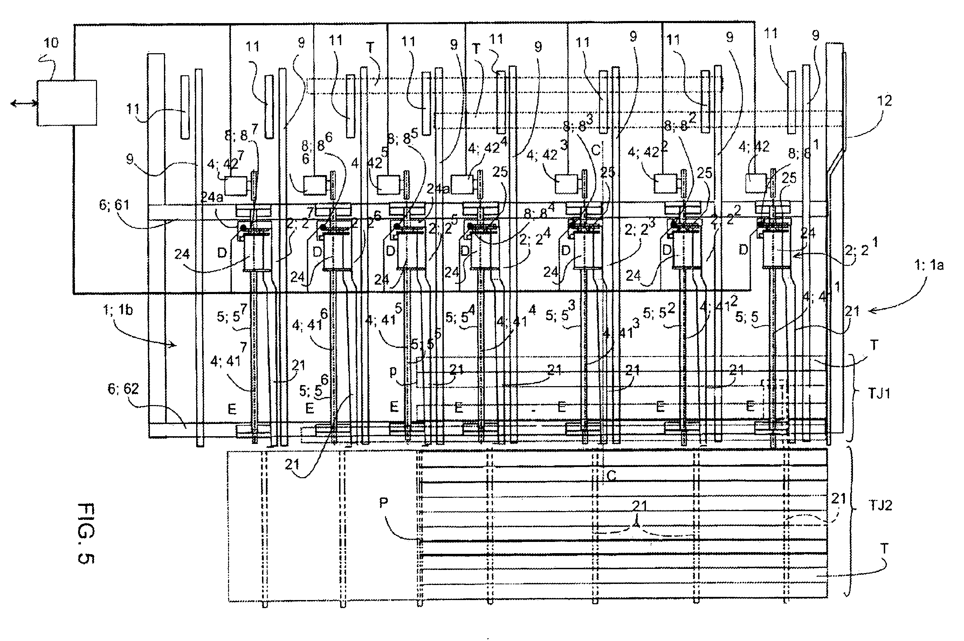

In one instance, some of the sawn timbers T are of such a length that said timbers may extend from the end fence 12 to more or less halfway across the transfer fork 1, while some of the sawn timbers are of a length that enables the same to extend from a first end 1 a to a second end 1 b of the transfer fork 1 (see fig. 1). In another instance, all sawn timbers to be organized for a package are equal in length, such as e.g. 4,1 m (see fig. 5). The transfer fork 1 has preferably a total length of about 6 m (maximum length of sawn timbers) in the longitudinal direction of sawn timbers from first end to second end, but naturally it may vary as per application.

In the embodiment according to fig. 1, the transfer fork 1 comprises a transverse fork body 3, to which the carrier arms 2 are connected by one end. The fork body 3 is most preferably established by a beam 31, which is disposed transversely, most preferably perpendicularly, with respect to the carrier arms 2, especially to a longitudinal direction C-C of the carrier arms. The fork body 3; 31 is fixed to the arm block 24 of each carrier arm 2 with an appropriate attachment flange 240 or the like bracket. The fork body 3 is most preferably disposed under the carrier arms 2.

The drive unit 4 for actuating the transfer fork 1 and especially the carrier arms 2 between the first and second positions D, E is preferably established by means of a conveyor 41 linked with the fork body 3, such as a chain conveyor or the like conveyor equipped with an endless transfer element, and by means of a suitable power unit 42, such as an electric motor.

Alternatively, the drive unit 4 can be established by means of a pressure fluid cylinder or a combination electric motor and traversing screw, which are disposed between the fork body 3, such as the beam 31, and the structural frame 6 of the transfer apparatus.

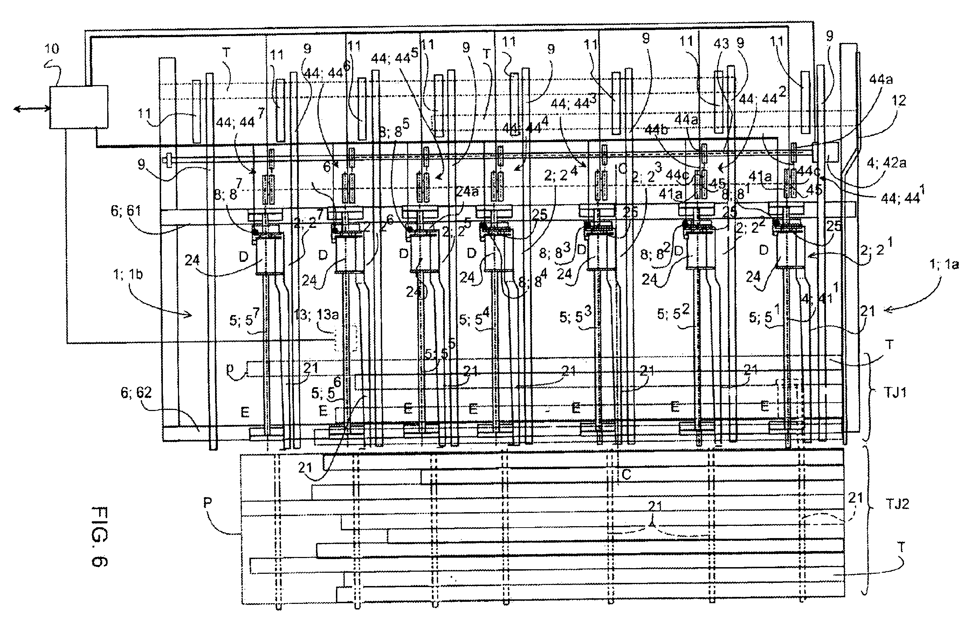

In a second alternative, fig. 5, the drive unit 4 for working a transfer fork is established in such a way that each carrier arm 2; 2¹, 2²,..., 2⁶, 2⁷ has linked therewith a separate conveyor 41¹, 41²,..., 41⁶, 41⁷, such as a chain conveyor or the like conveyor equipped with an endless transfer element, and with this a designated own power unit 42¹, 42²,..., 42⁶, 42⁷, such as an electric motor, for operating the conveyor, said conveyor being used for working the carrier arms between a first D and a second position E. The conveyor of each carrier arm, such as a chain conveyor, has its reversing wheels disposed most preferably in connection with the structural frame 6, especially the crosswise beams 61, 62, conveniently in the proximity of the carrier arm 2¹, 2²,..., 2⁶, 2⁷ lengthwise thereof and outside the carrier arm's traveling range. Each power unit, such as an electric motor, has its rotating shaft connected (directly or indirectly) to one of the conveyor's reversing wheels.
In a third alternative, fig. 6, the drive unit 4 for working a transfer fork is established in such a way that each carrier arm 2; 2¹, 2²,..., 2⁶, 2⁷ has linked therewith its designated separate conveyor 41¹, 41²,..., 41⁶, 41⁷, such as a chain conveyor or the like, as in the second alternative, but these drive units are provided with a common power unit 42a, such as an electric motor, for operating the conveyor. In this alternative, for example, the power unit 42a has its rotating shaft 43 adapted to extend preferably in a crosswise direction of the structural frame 6, such as in a longitudinal direction of the beams 61, 62, at least over a portion of the transfer fork's 1 breadth (i.e. to the area extending from a first end 1 a to a second end 1 b of the transfer fork) and this is provided, in line with each carrier arm 2; 2¹, 2²,..., 2⁶, 2⁷, with a transmission conveyor 44; 44¹, 44²,..., 44⁶, 44⁷ which is connected dismountably (and mountably, respectively) to the separate conveyors 41¹, 41²,..., 41⁶, 41⁷ of the carrier arms. The transmission conveyor 44 comprises in this case a first reversing transmission wheel 44a or the like, which is in turn connected by way of an endless chain 44b or the like power transmission element to a second reversing transmission wheel 44c, which latter is adapted to operate the conveyor 41¹, 41²,..., 41⁶, 41⁷ of a relevant carrier arm.

Set between the separate conveyor 41¹, 41²,..., 41⁶, 41⁷ of each carrier arm and the common power unit 42a is most preferably a decoupling device 45. In one embodiment, the second reversing transmission wheel 44c, which is adapted to drive the conveyor 41¹, 41²,..., 41⁶, 41⁷ of a relevant carrier arm, is provided with a connection from one reversing wheel 41 a to the above-mentioned second reversing transmission wheel 44c by means of the appropriate decoupling device 45, such as a friction clutch or the like. When the decoupling device 45 is not in action, it means that the rotating force is transmitted from the common power unit 42a, by way of the rotating shaft 43, the reversing transmission wheels 44a, 44c of the transmission conveyor 44, and a chain 44b linking the same, to the decoupling device 45 and to the carrier arm's conveyor 41¹, 41²,..., 41⁶, 41⁷ by way of one reversing wheel 41 a thereof. When the decoupling device 45 is in action, the force is not transmitted from the common power unit 42a to the reversing wheel 41 a of a relevant conveyor of the carrier arm. As a result of this, the carrier arm is not in motion but held stationary in the first position D. The decoupling device 45 associated with the conveyor 41¹, 41²,..., 41⁶, 41⁷ of each carrier arm 2 is controlled by means of a control unit 10 utilizing the length information of sawn timbers as presented above.

Optionally, the separate conveyors 41¹, 41²,..., 41⁶, 41⁷ can be established by means of a pressure fluid cylinder or a combination electric motor and traversing screw, which are disposed between each carrier arm 2; 2¹, 2²,..., 2⁶, 2⁷ and the structural frame 6 of the transfer apparatus.

The above-presented second and third alternatives do not necessarily require any fork body 3 interconnecting the carrier arms 2. However, it should be noted that the embodiment provided with a fork body offers the benefit of the transfer fork 1 being significantly braced and reinforced by the fork body.

The carrier arm's 2 shaft member 21 has a cross-section which is preferably a rectangle or a modified form thereof. In a plane perpendicularly transverse to the longitudinal direction C-C, such a shaft member 21 has a width which is most preferably several times, e.g. 3...5 times, more than its height. In addition, the carrier arm, especially said shaft member 21, comprises two surfaces 22, 23 in the longitudinal direction C-C of the carrier arm, which surfaces in a perpendicular transverse plane are at an angle α relative to each other. As for said surfaces of the carrier arm, the first surface 22 is straight and slick and the second surface 23 is a rough or the like friction surface with a high friction coefficient. The first surface 22 is established on a broad side of the rectangle-shaped shaft member. The carrier arm 2 is constructed preferably in steel or the like material. Hence, the first surface 22 is e.g. a smooth metal surface. The second surface 23 is narrow, preferably like a stripe, and constructed e.g. in a steel ribbon with a multitude of sharp protrusions, such as teeth or the like, directed outward of the surface.

With regard to the carrier arms 2, reference is made to the Finnish patents cited earlier as prior art, which disclose various designs for carrier arms, such as first and second surfaces thereof, such carrier arms being also compatible with a transfer apparatus according to the invention.

The transfer apparatus has its transfer fork 1 provided with a rotating device 7, 8 for rotating the carrier arms 2. In a plane perpendicular to the longitudinal direction C-C, i.e. in transverse plane relative thereto, the transfer fork 1 has its carrier arms 2; 2¹, 2²,..., 2⁶, 2⁷ rotatable by means of the rotating device 7, 8 across a suitable angle α. This way, an upward facing surface of the carrier arms 2 can be switched by a rotating action from the first surface 22 to the second surface 23, i.e. from a basic position to a working position and vice versa. While being turned upward in the working position, the second surface 23 is also adapted to rise to a higher level than the first surface 22 and at the same time to a level higher than that of the feed conveyor 9.

In addition, in one preferred embodiment, the carrier arm 2 is also adaptable to have an intermediate position between the basic position and the working position. In the intermediate position, the carrier arm 2 has its angle α wider than in the basic position and narrower than in the working position. In the basic position, the angle α = 0 (or close to that) and in working position α = 90 degrees (or close to it), whereby, in the intermediate position, the angle α is e.g. 45 degrees or e.g. within the range of 30-60 degrees. In the intermediate position, the carrier arm has its upturned edge on a level lower than that of the feed conveyor 9.

The carrier arm 2 has its shaft member 21 attached to the arm block 24 by means of a suitable swivel bearing 25 for making the shaft member 21 rotatable relative to the arm block 24 in a plane perpendicular to the longitudinal direction C-C. The allowed angular range for the rotating motion is at least equal to the angle α between the first and second surfaces 22, 23. The swivel bearing 25 is realized e.g. by means of one or more flanges, cylinders and/or bushes of the type whose rotating axis is parallel to the carrier arm's longitudinal axis C-C and which is appropriately supported on the arm block 24. The shaft member 21 is attached by a first end, i.e. an attachment end 21 a, to the arm block 24, preferably to its side. A second end 21 b of the shaft member is unattached and this part of the shaft member 21, in particular, comprises said two surfaces 22, 23 co-directional with the longitudinal direction C-C of the carrier arm. The carrier arm's second end 21 b is comparatively long and constitutes a majority of the shaft member 21. A transfer of the sawn timbers T, TJ1 is carried out specifically by means of the second end 21 b of the shaft member 21.

In a transfer apparatus of the invention, at least some of the carrier arms 2 of the transfer fork 1, i.e. a second set of carrier arms 2; 2⁵, 2⁶, 2⁷, are provided with a designated separate rotating device 8; 8⁵, 8⁶, 8⁷ which is only linked in connection with this particular carrier arm (see fig. 1). Thus, the discussed carrier arm, e.g. 2; 2⁶, is rotatable regardlessly and independently of other carrier arms, e.g. 2; 2¹, 2², 2³, 2⁴, 2⁵ 2⁷, in a plane perpendicular to the longitudinal direction C-C. The second set of arms includes one, two, or as many as three carrier arms 2⁵, 2⁶, 2⁷ from among e.g. seven carrier arms 2; 2¹, 2²,..., 2⁶, 2⁷, said carrier arms being equipped with an independently controlled separate rotating device 8; 8⁵, 8⁶, 8⁷.

In the embodiment depicted in the drawings, the separate rotating device 8; 8⁵, 8⁶, 8⁷ for each carrier arm of the second set of carrier arms 2; 2⁵, 2⁶, 2⁷ is fitted between the fork body 3; 31 and the swivel bearing 25 of a carrier arm's arm block 24. In optional embodiments, in which the means 4 for working a transfer fork are realized by means of the separate conveyor 41¹, 41²,..., 41⁶, 41⁷, such as a chain conveyor or the like endless conveyor, connected to each carrier arm 2; 2¹, 2²,..., 2⁶, 2⁷, the transfer apparatus does not require the use of a fork body 3 interconnecting the carrier arms 2. In this case, in connection with each carrier arm 2 is provided a suitable brace 24a, which is secured to the arm block 24 or constitutes a part of it. Between this brace 24a and the swivel bearing 25 is in this case fitted a carrier arm rotating device for the second set of carrier arms 2; 2⁵, 2⁶, 2⁷.

The carrier arms other than those 2; 2⁵, 2⁶, 2⁷ of the second set of carrier arms are included in a first set of carrier arms 2; 2¹, 2², 2³, 2⁴. These carrier arms are provided with a single joint rotating device 7. This rotating device 7 comprises most preferably a straight rod 71 and an actuator 72 driving the same, such as a pressure fluid cylinder or optionally an electric motor and a traversing screw. The rod is adapted to extend so as to be reachable by all carrier arms 2; 2¹, 2², 2³, 2⁴ included in the first set of carrier arms. The rod 71 is connected by way of levers 71 a to the swivel bearing 25 of each relevant carrier arm. By driving the actuator 72 for the rotating device 7, the rod 71 is traversed in its longitudinal direction F between two end positions and thereby an influence is simultaneously exerted on every carrier arm 2; 2¹, 2², 2³, 2⁴ of the first set of carrier arms for thus rotating the same in a plane transverse to the longitudinal direction C-C across the angle α.

In the embodiment depicted in the drawings, the joint rotating device 7 has its rod 71 supported on the fork body 3; 31. The rod 71 is adapted to extend in a longitudinal direction of the fork body 3; 31 in such a way that it is brought within the reach of all carrier arms 2; 2¹, 2², 2³, 2⁴ included in the first set of carrier arms.

In a preferred embodiment of the invention, that number of carrier arms 2; 2⁵, 2⁶, 2⁷, which are provided with the separate rotating devices 8; 8⁵, 8⁶, 8⁷ designated therefor, are arranged at the second end 1 b of the transfer fork 1, while the other carrier arms 2; 2¹, 2², 2³, 2⁴, which are provided with the joint rotating device 7; 71, 72 for a joint rotation thereof, are arranged at the first end 1 a of the transfer fork 1.

It should be noted that, in some preferred embodiments of the invention, all carrier arms 2; 2¹, 2²,..., 2⁶, 2⁷ can be provided with the separate designated rotating devices 8; 8¹, 8², ..., 8⁶, 8⁷, as specifically illustrated in the embodiments of figs. 5 and 6. On the other hand, even in these mentioned embodiments it is possible that some of the carrier arms 2 be provided with the joint rotating device 7 instead of the separate rotating deices 8.

All carrier arms 2; 2¹, 2²,..., 2⁶, 2⁷ of the transfer fork 1, and the rotating devices 7, 8 and the conveyors 41; 41¹,41²,..., 41⁶, 41⁷ thereof, just like the operation of the entire transfer apparatus and transits between the positions D and E, are controlled with an appropriate control unit 10 which comprises preferably a suitable data processing unit, such as a microprocessor or the like. Hence, length information for the sawn timbers T, or at least position information for ends p of the sawn timbers T, is available for the control unit 10. What is checked with the control unit 10 is a position of the end p of each transfer-bound sawn timber T, TJ in relation to the location of each carrier arm 2; 2¹, 2²,..., 2⁶, 2⁷. Most preferably, the control unit 10 is in this case used for checking whether the length of a sawn timber close to a distance between one of the transfer fork's 1 carrier arms 2; 2¹, 2²,..., 2⁶, 2⁷ and the fence 12, i.e. close to the position information of a carrier arm. In the event that the sawn timber T has its end p close to the location of a carrier arm 2, i.e. the sawn timber has a length which is close to the position information of a carrier arm, there is a control command issued by the control unit 10 not to rotate (or, in an optional application, not even to operate) this particular carrier arm.

In one instance, the sawn timbers T to be gathered for a package P or the like stockpile are of identical length, i.e. the length of all sawn timbers is the same (see fig. 5). In this case, it is preferred that the length information of a sawn timber be obtained from a packaging instruction or a trimming shop running program. After all, it is the trimming shop where sawn timbers are cut to a desired length, or, in this case, to an equal length. Alternatively, the sawn timbers are measured with an appropriate measuring device prior to the arrival thereof at transfer equipment, e.g. while being on a feed conveyor. This procedure of gathering length information about sawn timbers can also be used when the sawn timbers, which are about to be gathered by a transfer apparatus for a package or the like, are of unequal length.

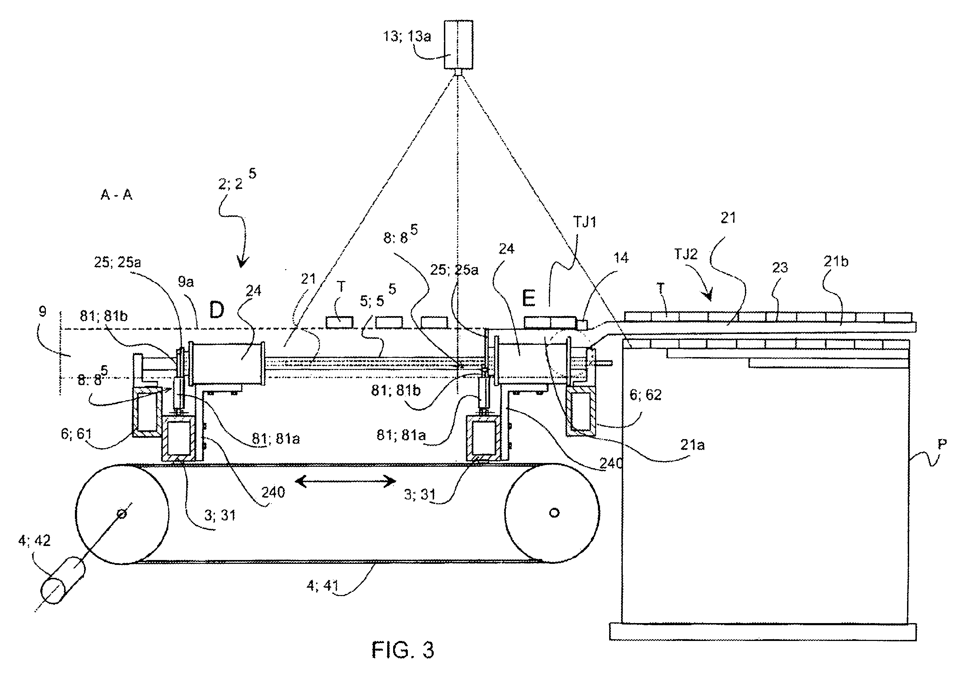

In one preferred embodiment of the invention, the transfer apparatus, especially the transfer fork 1 and its carrier arms 2, is provided with a measuring device, comprising one or more measuring sensor 13 coupled with the control unit 10 (see figs. 1 and 3). Information obtained from the measuring sensor 13; 13a is applied especially for controlling functions of the carrier arm 2, such as rotating and/or traversing.

The measuring sensor 13 is realized by means of optical sensors and/or one or more cameras 13a. An object of the measuring sensor 13; 13a is to detect a position of the end p of each sawn timber T, TJ, particularly in relation to a location of each carrier arm 2. Information obtained from the measuring sensor 13; 13a is particularly applied to monitoring and controlling the rotating function of the carrier arms 2; 2⁵, 2⁶, 2⁷ equipped with the separate rotating devices 8; 8⁵, 8⁶, 8⁷.

The camera 13a is a preferred measuring sensor for being disposable at a distance above the transfer fork 1 in the position D, especially above the transfer fork's second end 1 b and those carrier arms 2⁵, 2⁶, 2⁷ which are provided with the separate rotating device 8; 8⁵, 8⁶, 8⁷, as specifically illustrated e.g. in figs. 1 (in a plan view) and 3 (in a side view). The camera 13a is most preferably a digital camera unit, which is directly connectible to the control unit 10 by way of a suitable communication bus.

Messages provided by the measuring sensor 13; 13a, such as two-dimensional pictures captured successively by the camera 13a, are used for determining - most preferably in the control unit 10 or the like - at least positions of the ends p of the individual sawn timbers T included in the set of sawn timbers TJ1 in relation to the transfer fork's 1 carrier arms 2, especially in relation to stripe-like locations of the carrier arms. Based on this information, especially the separate rotating devices 8; 8⁵, 8⁶, 8⁷ of the carrier arms 2⁵, 2⁶, 2⁷ are monitored and controlled.

When a message is received from the measuring sensor 13; 13a that positions of the ends p of the sawn timbers T, TJ1 are not at the location of a specific carrier arm, e.g. 2; 2⁵, 2⁷, (i.e. in coincidence with or in the immediate proximity of the carrier arm), the discussed carrier arm is rotated by means of a rotating device, e.g. 8; 8⁵, 8⁷, from the basic position to the working position, i.e. the second or rough surface 23 upwards. When a message is received from the measuring sensor 13; 13a that a position of the end p of at least one sawn timber T, TJ1 is at the location of a specific carrier arm, e.g. 2; 2⁶, the discussed carrier arm shall not be rotated by means of a rotating device, e.g. 8; 8⁶, from the basic position to the working position, but is left in the basic position (or, alternatively, rotated to the intermediate position), i.e. in a condition with the first or slick surface 22 facing upwards.

It should be pointed out that, as a rule, those carrier arms 2; 2¹, 2², 2³, 2⁴ of the first set of carrier arms, which are provided with the joint rotating device 7; 71, 72, are always instructed to function in such a way that, in the first position D, they are rotated from the basic position to the working position, i.e. the second or rough surface 23 upwards. Thus, in this case, the set of sawn timbers TJ1 is arranged in the first position D to being supported by all those carrier arms which are rotated from the basic position to the working position and by which a passage to the second position E is executed.

As already pointed out above, the carrier arms are divided in one embodiment of the invention into two parallel sets, into a second and a first set of carrier arms, which are disposed at the first 1 a and the second 1b end of the transfer fork 1. Thus, in the first position D, one or more sawn timbers T, i.e. the set of sawn timbers TJ1, are preferably moved in a longitudinal direction by means of the lateral roller assembly 11 against the end fence 12 for bringing the first ends thereof against the discussed fence. This is executed while carrying at the same time the sawn timbers forward in a transverse direction by means of the feed conveyor 9. Because the sawn timbers T are in this example unequal in length, e.g. 3,2 m, 4 m and/or 6 m, the second ends p thereof are at unequal distances from said end fence 12 and may therefore extend to the proximity of the carrier arm 2; 2⁵, 2⁶, 2⁷ included in the second end 1 b. The occurrence of the end p of the sawn timber T in the proximity of one carrier arm (or several carrier arms), e.g. 2; 2⁶, is detected by one or more sensor elements 13, such as the camera 13a.

In a preferred embodiment of the invention, the separate rotating device 8; 8¹, 8², ..., 8⁶, 8⁷ for the carrier arm 2; 2¹, 2², ...2⁵, 2⁶, 2⁷ is realized by means of a pressure fluid cylinder 81, most preferably a hydraulic cylinder. In the embodiment according to fig. 1, the pressure fluid cylinder 81 is fitted between the fork body 3; 31 and the arm block 24, especially its swivel bearing 25, e.g. such that the cylinder has its body 81 a attached to the fork body essentially below the carrier arm 1 and the cylinder has its piston 81 b linked in connection with the swivel bearing 25 and the carrier arm's shaft member 21 in such a way that the angular position of the swivel bearing 25 and thereby that of the carrier arm 2; 2⁵, 2⁶, 2⁷ can be worked on by operating the cylinder 81 and thereby moving the piston 81 b. In some other embodiments of the invention, the separate rotating device 8, in this case the pressure fluid cylinder 81, is apt to be disposed between the brace 24a fixed to the arm block 24 and the swivel bearing 25.

Optionally, the rotating device 8 is implementable by means of a traversing screw and an electric motor, e.g. a servomotor.

The transfer apparatus according to the invention operates as follows. First, the feed conveyor 9 is used for carrying sawn timbers to the transfer apparatus and the sawn timbers T are gathered at an upstream end of the feed conveyor. At this time, the transfer fork 1 is in the first position D and the carrier arms 2 are located below the upstream end of the feed conveyor 9, especially below a carrying level 9a of the feed conveyor. The transfer fork 1 has its carrier arms 2 in a basic position, i.e. with the first surface 22, i.e. a slick surface, facing upwards. When an appropriate number of sawn timbers T, i.e. a set of sawn timbers TJ1, has been gathered on the feed conveyor 3, e.g. against a suitable stopper 14, for a comparatively dense tier of sawn timbers, the desired carrier arms 2 of the transfer fork 1 are rotated, under a control of the control unit 10, by means of the rotating device 7; 8 to a working position, such that the second surface 23 of these carrier arms 2, i.e. a rough surface or the like friction surface, faces upwards. The same rotating motion enables the second surface 23 of the desired carrier arms 2 to rise above the carrying level and the set of sawn timbers TJ gathered on the feed conveyor 9 can be passed over from being supported by the feed conveyor 9 to being supported by the desired carrier arms 2 of the transfer fork 1.

A selection in the first position D of those carrier arms 2, which are ordained to be flipped by the rotating device 7, 8 to a working position, is executed as determined by a position of the ends p of the sawn timbers T gathered on the feed conveyor 9.

The position of the ends p of the sawn timbers T is determined by one or more measuring sensors 13, such as the camera 13a. Alternatively, the length information of the sawn timbers T is obtained from a packaging instruction or from a suitable timber processing operation preceding the packaging or stacking, and on the basis of this length information, the position of the ends p of the sawn timbers T is determined. If the end p of one or more sawn timbers T is positioned in the proximity of a location defined for a carrier arm 2 of the transfer fork 1, this particular carrier arm 2; 2⁵, 2⁶, 2⁷ shall not be rotated at all to the working position, i.e. the separate rotating device 8; 8⁵, 8⁶, 8⁷ associated therewith is not given from the control unit 10 such a control command that would activate the operation of the rotating device, but, instead, the rotating device is held passive and this particular carrier arm of the transfer fork is allowed to remain in the basic position with its first surface 22 facing upwards. Alternatively, in the event that the carrier arm can be arranged to have also an intermediate position between the basic position and the working position, the carrier arm shall indeed be rotated to this intermediate position instead of being left in the basic position. In the intermediate position, the carrier arm is most preferably at such an angle α that the carrier arm has its upper edge above the top surface of a progressing timber pile P but not on level with a next top surface created by another added tier of sawn timbers.

In the next operation, the transfer fork 1, along with its sawn timbers TJ1, is traversed in a longitudinal direction C-C of the carrier arms 10 over a predetermined traveling distance from the first position D to the second position E for assembling therein e.g. a package P or the like. When the transfer fork 1 has been successfully delivered to the second position E, the desired, already pre-selected transfer fork's carrier arms 2 are rotated again, but from the working position to the basic position, and are pulled out the pile P of sawn timbers for bringing the first and slick surface 22 of the carrier arm against a set of sawn timbers TJ2 resting on top of the carrier arms. The one or more carrier arms 2; 2⁵, 2⁶, 2⁷, which is/are held passive, i.e. in the basic position, are already present with the first or slick surface 22 facing upwards.

Alternatively, when the transfer fork 1 has been successfully delivered to the second position E, the desired, already pre-selected transfer fork's carrier arms 2 are rotated to an intermediate position, followed by pulling the same out of the pile P of sawn timbers. This intermediate position of the carrier arms 2 may facilitate extraction of the carrier arms from a pile of sawn timbers in comparison to what is achieved by rotating the carrier arms to the basic position.

In an alternative embodiment of the invention, at least some of the transfer fork's carrier arms are available for independent use regardless of other carrier arms. The carrier arm is omissible to remain stationary in the first position D, in which case this particular carrier arm is not used at all for the transfer of sawn timbers from the first position to the second position and to a package or the like. Such a carrier arm is left passively stationary in the first position D in the event that a transfer-bound set of sawn timbers (i.e. one or more) sawn timbers T has its end p at a location of the carrier arm. A transfer of the set of sawn timbers TJ1 from the first position D to the second position E is executed by means of those other carrier arms, which have sawn timbers extending across and which are thus driven in an appropriate manner.

Such simple and unexpected apparatus designs and method enable preventing the sawn timbers T, especially parallel, transfer-bound sawn timbers, i.e. the set of sawn timbers TJ1, TJ2, from muddling up and crisscrossing on top of each other, because the unattached end p of a sawn timber cannot be struck by or exposed to the action of the carrier arm 2; 2⁵, 2⁶, 2⁷ while being pivoted by the separate rotating device 8; 8⁵, 8⁶, 8⁷ or when the carrier are is not deployed but left passively in place. The end p of a sawn timber T is not subjected to any motive action as the sawn timbers are picked up for being supported by the carrier arms in the first position D, nor to any compressive forces while assembling a package P of sawn timbers or the like stack in the second position E, because the risk position of the sawn timbers' T ends p in relation to the discussed carrier arms was detected, nor were these carrier arms deployed as regards this particular transfer-bound set of sawn timbers TJ.

Following the above-described operation, the transfer fork 1 shall be moved in the longitudinal direction C-C of the carrier arms 2 rearward or from the second position E to the first position D, whereby the set of sawn timbers TJ2 is left in its place in the developing package P of sawn timbers or in the like stockpile and the carrier arms can be slid by virtue of the second slick surface 23 thereof out from under the set of sawn timbers TJ2 and, hence, the set of sawn timbers, which is left immovably behind, establishes preferably a topmost tier for the package P. The cycle is commenced again, another set of sawn timbers TJ1 is gathered in the first position D on the feed conveyor 3 and this set of sawn timbers is delivered by the transfer apparatus, especially by the transfer fork 1, again to the second position E and to a package. This is continued until a sufficient number of sawn timber tiers have been successfully piled up and the package is ready, after which is carried forward from a package-building platform and the assembly of a new package can be started.

The invention is not limited to apply solely to the foregoing exemplary embodiment, but plenty of modifications are possible while remaining within an inventive concept as defined by the claims.

## Claims

1. A transfer apparatus for carrying sawn timbers or similar pieces, said transfer apparatus including a transfer fork (1) which comprises a set of adjacent spaced-apart carrier arms (2; 2¹, 2²,..., 2⁶, 2⁷) and means (4; 41, 42) for working the transfer fork in a longitudinal direction (C-C) of the carrier arms from a first position to a second position and back, said transfer fork enabling one or more parallel sawn timbers (T; TJ1) to be carried from a first position (D), from a feed conveyor (9) or the like, to a second position (E), and the carrier arms (2; 2¹, 2²,..., 2⁶, 2⁷) of said transfer fork being rotatable in a plane transverse to the longitudinal direction (C-C) and comprising at least two substantially straight surfaces (22, 23) co-directional with the carrier arm, which in a lateral plane are at an angle (α) relative to each other, and of said surfaces the first one (22) is slick and the second one (23) is rough, and at least some of the transfer fork's (1) carrier arms (2) are equipped with an independent rotating device (8) designated therefor, **characterized in that** a particular carrier arm (e.g. 2⁵) is rotatable in a plane transverse to the longitudinal direction independently of other carrier arms (2; 2¹, 2, 2³, 2⁴; 2⁶; 2⁷) and the transfer fork (1) is provided with one or more measuring sensors (13; 13a) for detecting the position of an end (p) of the sawn timber (T) included in a transfer-bound set of sawn timbers (TJ1) in relation to the location of each carrier arm (2), said information received from the measuring sensor (13; 13a) being used for controlling the rotating function of those carrier arms (2; 2⁵, 2⁶, 2⁷) which are provided with the independent rotating devices (8; 8⁵, 8⁶, 8⁷).

2. A transfer apparatus according to claim 1, **characterized in that** at least some of the transfer fork's (1) carrier arms (2; 2¹, 2, 2³, 2⁴; 2⁶; 2⁷) are provided with separate conveyors (41¹, 41²,..., 41⁶, 41⁷) designated therefor and with power units (42¹, 42²,..., 42⁶, 42⁷) for driving the conveyors, by which conveyor each carrier arm of the transfer fork is ordained to be moved in the longitudinal direction (C-C) of the carrier arms from the first position (D) to the second position (E) and back.

3. A transfer apparatus according to claim 1, **characterized in that** at least some of the transfer fork's (1) carrier arms (2; 2¹, 2, 2³, 2⁴; 2⁶; 2⁷) are provided with separate conveyors (41¹, 41²,..., 41⁶, 41⁷) designated therefor, which are equipped with a joint power unit (42; 42a), by which the discussed carrier arms of the transfer fork is ordained to be moved in the longitudinal direction (C-C) of the carrier arms from the first position (D) to the second position (E) and back.

4. A transfer apparatus according to claim 3, **characterized in that** between the separate conveyor (41¹, 41²... 41⁶, 41⁷) of each carrier arm and the joint power unit (42; 42a) is a decoupling device (45).

5. A transfer apparatus according to any of the preceding claims, **characterized in that** the segment of carrier arms (2; 2⁵, 2⁶, 2⁷), which is provided with the designated independent rotating device (8; 8⁵, 8⁶, 8⁷), is disposed at a second end (1 b) of the transfer fork (1), while the other carrier arms (2; 2¹, 2², 2³, 2⁴), which are provided with a joint rotating device (7; 71, 72) for the joint rotation thereof, are disposed at a first end (1 a) of the transfer fork (1).

6. A transfer apparatus according to any of the preceding claims, **characterized in that** the independent rotating device (8; 8⁵, 8⁶, 8⁷) is implemented by means of a pressure fluid cylinder (81), most preferably a hydraulic cylinder.

7. A transfer apparatus according to any of preceding claims, **characterized in that** the measuring sensor (13) is implemented by means of a camera (13a).

8. A method for operating a transfer apparatus, said transfer apparatus being intended for carrying sawn timbers or similar pieces, said transfer apparatus including a transfer fork (1) which comprises a set of adjacent spaced-apart carrier arms (2; 2¹, 2²... 2⁶, 2⁷), and in which apparatus the transfer fork is worked in a longitudinal direction (C-C) of the carrier arms from a first position (D) to a second position (E) and back, said transfer fork enabling one or more parallel sawn timbers (T, TJ1) to be carried from a first position (A), from a feed conveyor (9) or the like, to a second position (B), and the carrier arms (2; 2¹, 2²... 2⁶, 2⁷) of said transfer fork being rotatable in a plane transverse to the longitudinal direction (C-C) and comprising at least two substantially straight surfaces (22, 23) co-directional with the carrier arm, which in a lateral direction are at an angle (α) relative to each other, and of said surfaces the first one (22) is slick and the second one (23) is rough, **characterized in that** at least some of the transfer fork's (1) carrier arms (2) are adapted to be rotated by independent rotating devices (8), such that such a carrier arm is rotatable in a plane transverse to the longitudinal direction independently of other carrier arms and the transfer fork (1) is being equipped with one or more measuring sensors (13; 13a) for detecting the position of an end (p) of the sawn timber (T) included in a transfer-bound set of sawn timbers (TJ1) in relation to the location of each carrier arm (2), said information received from the measuring sensor (13; 13a) being used for controlling the rotating function of the carrier arms (2; 2⁵, 2⁶, 2⁷) which are provided with the independent rotating devices (8; 8⁵, 8⁶, 8⁷).

9. A method according to claim 8 for operating a transfer apparatus, **characterized in that** at least some of the transfer fork's (1) carrier arms (2; 2¹, 2, 2³, 2⁴; 2⁶; 2⁷) are capable of being carried, independently of other carrier arms, by a separate conveyor (41¹, 41²... 41⁶, 41⁷) and a power unit (42¹, 42²... 42⁶, 42⁷) driving the same, in the longitudinal direction (C-C) of the carrier arms from the first position (D) to the second position (E) and back.

## Patentansprüche

1. Übertragapparatur zum Tragen gesägten Holzes oder ähnlicher Stücke, welche Übertragapparatur eine Übertrag-Gabel (1) aufweist, die einen Satz benachbarter beabstandeter Trägerarme (2; 2¹, 2², ..., 2⁶, 2⁷) und Mittel (4; 41, 42) zum Bedienen der Übertrag-Gabel in einer Längsrichtung (C-C) der Trägerarme von einer ersten Position an eine zweite Position und zurück hat, wobei es die Übertrag-Gabel ermöglicht, einen oder mehrere gesägte parallele Hölzer (T; TJ1) von einer ersten Position (D) von einem Zufuhr-Förderer (9) oder dergleichen an eine zweite Position (E) zu transferieren, wobei die Trägerarme (2; 2¹, 2², ..., 2⁶, 2⁷) der besagten Übertrag-Gabel in einer Ebene quer zur Längsrichtung (C-C) rotierbar sind und mindestens zwei im Wesentlichen gerade Flächen (22, 23) aufweisen, die co-direktional sind und in einer seitwärtigen Ebene in einem Winkel (α) relativ zueinander stehen, wobei die erste (22) der besagten Flächen glatt ist und die zweite (23) rau ist, und wobei zumindest einige der Trägerarme (2) der Übertrag-Gabel (1) mit einer unabhängigen Rotationsvorrichtung (8) zur diesbezüglichen Bestimmung versehen sind, **gekennzeichnet dadurch, dass** ein bestimmter Trägerarm (beispielsweise 2⁵) in einer Ebene quer zur Längsrichtung unabhängig von anderen Trägerarmen (2; 2¹, 2, 2³, 2⁴; 2⁶; 2⁷) drehbar ist, und die Übertrag-Gabel (1) mit einem oder mehreren Mess-Sensoren (13; 13a) zum Detektieren der Position eines Endes (p) des gesägten Holzes (T), das in einem Übertrag-Pündelsatz von gesägtem Holz (TJ1) enthalten ist, relativ zur Lage eines jeden Trägerarms (2) versehen ist, wobei die von dem Messsensor (13; 13a) erhaltene Information zum Steuern der Rotationsfunktion derjenigen Trägerarme (2; 2⁵, 2⁶, 2⁷) verwendet wird, die mit den unabhängigen Rotationsvorrichtungen (8; 8⁵, 8⁶, 8⁷) versehen sind.

2. Übertrag-Apparatur nach Anspruch 1,
**dadurch gekennzeichnet, dass** mindestens einige der Trägerarme (2; 2¹, 2, 2³, 2⁴; 2⁶; 2⁷) der Übertrag-Gabel (1) mit separaten Fördervorrichtungen (41¹, 41², ..., 41⁶, 41⁷) zur diesbezüglichen Bestimmung versehen sind, sowie mit Stromversorgungseinheiten (42¹, 42², ..., 42⁶, 42⁷) zum Betreiben der Fördervorrichtungen, wobei durch die Fördervorrichtung jeder Trägerarm der Übertrag-Gabel dazu bestimmt ist, in der Längsrichtung (C-C) der Trägerarme von der ersten Position (D) an die zweite Position (E) und zurück bewegt zu werden.

3. Übertrag-Apparatur nach Anspruch 1,
**dadurch gekennzeichnet, dass** mindestens einige Trägerarme (2; 2¹, 2, 2³, 2⁴; 2⁶; 2⁷) der Übertrag-Gabel (1) mit separaten Fördervorrichtungen (42¹, 42², ..., 42⁶, 42⁷) zur diesbezüglichen Bestimmung versehen sind, die mit einer zusammengeschlossenen Stromversorgungseinheit (42; 42a) versehen sind, durch die die besagten Trägerarme der Übertrag-Gabel dazu bestimmt sind, in der Längsrichtung (C-C) der Trägerarme von der ersten Position (D) an die zweite Position (E) und zurück bewegt zu werden.

4. Übertrag-Apparatur nach Anspruch 3,
**dadurch gekennzeichnet, dass** zwischen den separaten Fördervorrichtungen (42¹, 42², ..., 42⁶, 42⁷) eines jeden Trägerarms und der zusammengeschlossenen Stromversorgungseinheit (42; 42a) eine Entkopplungsvorrichtung (45) vorgesehen ist.

5. Übertrag-Apparatur nach einem der vorangehenden Ansprüche,
**dadurch gekennzeichnet, dass** das Segment der Trägerarme (2; 2⁵,2⁶, 2⁷), das mit der bestimmten unabhängigen Rotationsvorrichtung (8; 8⁵, 8⁶, 8⁷) versehen ist, an einem zweiten Ende (1b) der Übertrag-Gabel (1) angeordnet ist, während die anderen Trägerarme (2; 2¹, 2², 2³, 2⁴), die mit einer zusammen geschlossenen Rotationsvorrichtung (7; 71, 72) zu deren gemeinsamer Rotation versehen sind, an einem ersten Ende (1a) der Übertrag-Gabel (1) angeordnet sind.

6. Übertrag-Apparatur nach einem der vorangehenden Ansprüche,
**dadurch gekennzeichnet, dass** die unabhängige Rotationsvorrichtung (8; 8⁵, 8⁶, 8⁷) mit Hilfe eines Druckfluid-Zylinders (81), am vorteilhaftesten mit einem Hydraulikzylinder ausgeführt ist.

7. Übertrag-Apparatur nach einem der vorangehenden Ansprüche,
**dadurch gekennzeichnet, dass** der Mess-Sensor (13) mit Hilfe einer Kamera (13a) implementiert ist.

8. Verfahren zum Betrieb einer Übertrag-Apparatur, welche Übertrag-Apparatur zum Tragen gesägter Hölzer oder ähnlicher Stücke bestimmt ist, wobei die Übertrag-Apparatur eine Übertrag-Gabel (1) aufweist, die einen Satz benachbarter und beabstandeter Trägerarme (2; 2¹, 2², ... 2⁶, 2⁷) hat, und in welcher Apparatur die Übertrag-Gabel in einer Längsrichtung (C-C) der Trägerarme von einer ersten Position (D) an eine zweite Position (E) und zurück betrieben wird, welche Übertrag-Gabel es ermöglicht, einem oder mehreren parallelen gesägten Holzstücken (T, TJ1) von einer ersten Position (A) von einem Zufuhr-Förderer (9) oder dergleichen an eine zweite Position (B) getragen zu werden, und wobei die Trägerarme (2; 2¹, 2², ... 2⁶, 2⁷) der Übertrag-Gabel in einer Ebene quer zur Längsrichtung (C-C) rotierbar sind und mindestens zwei im Wesentlichen gerade Flächen (22, 23) aufweisen, die mit dem Trägerarm co-direktional sind und in einer seitwärtigen Richtung in einem Winkel (α) relativ zueinander stehen, und wobei die erste (22) der besagten Flächen glatt ist und die zweite (23) rau ist,
**dadurch gekennzeichnet, dass** mindestens einige der Trägerarme (2) der Übertrag-Gabel (1) dazu bestimmt sind, durch unabhängige Rotationsvorrichtungen (8) rotiert zu werden, derart, dass ein Trägerarm in einer Ebene quer zur Längsrichtung unabhängig von anderen Trägerarmen rotierbar ist, und die Übertrag-Gabel (1) mit einem oder mehreren Mess-Sensoren (13; 13a) zum Detektieren der Position eines Endes (p) des gesägten Holzes (T), das in einem Übertrag-Pündelsatz von gesägtem Holz (TJ1) enthalten ist, relativ zur Platzierung eines jeden Trägerarms (2) versehen ist, und wobei die von dem Mess-Sensor (13; 13a) erhaltene Information zum Steuern der Rotationsfunktion der Trägerarme (2; 2⁵, 2⁶, 2⁷) verwendet wird, die mit den unabhängigen Rotationsvorrichtungen (8; 8⁵, 8⁶, 8⁷) versehen sind.

9. Verfahren nach Anspruch 8 zum Betreiben einer Übertrag-Apparatur, **dadurch gekennzeichnet, dass** mindestens einige der Trägerarme (2; 2¹, 2, 2³, 2⁴; 2⁶; 2⁷) der Übertrag-Gabel (1) unabhängig von anderen Trägerarmen durch eine separate Fördervorrichtung (41¹, 41², ..., 41⁶, 41⁷) und eine Stromversorgungseinheit (42¹, 42², ..., 42⁶, 42⁷) zum Antrieb derselben in der Längsrichtung (C-C) der Trägerarme von der ersten Position (D) zu der zweiten Position (E) und zurück getragen werden können.

## Revendications

1. Dispositif de transfert servant à manipuler des arbres ou analogues sciés, ledit dispositif de transfert comportant une fourche de transfert (1) qui comprend un ensemble de bras de déplacement adjacents (2; 2¹, 2², ..., 2⁶, 2⁷) espacés les uns des autres et des moyens (4 ; 41, 42) pour faire fonctionner la fourche de transfert dans un sens longitudinal (C-C) des bras de déplacement, passant d'une première position à une seconde position et inversement, ladite fourche de transfert permettant de déplacer un ou plusieurs arbres parallèles sciés (T ; TJ1) d'une première position (D), depuis un convoyeur d'alimentation (9) ou autre, à une seconde position (E), et les bras de déplacement (2 ; 2¹, 2²,..., 2⁶, 2⁷) de ladite fourche de transfert pouvant tourner dans un plan transversal par rapport au sens longitudinal (C-C) et comprenant au moins deux surfaces sensiblement planes (22, 23) à même orientation que le bras de déplacement, qui, dans un plan latéral, forment un angle (α) l'une par rapport à l'autre, et la première (22) desdites surfaces étant lisse tandis que la seconde (23) est rugueuse, et au moins certains des bras de déplacement (2) de la fourche de transfert (1) étant équipés d'un dispositif de rotation indépendant (8) spécifique de ceux-ci, **caractérisé en ce qu'**un bras de déplacement particulier (p.ex. 2⁵) peut tourner dans un plan transversal par rapport au sens longitudinal, indépendamment des autres bras de déplacement (2 ; 2¹, 2², 2³, 2⁴, 2⁶, 2⁷) et la fourche de transfert (1) est équipée d'un ou de plusieurs capteurs de mesure (13 ; 13a) servant à détecter la position d'une extrémité (p) de l'arbre scié (T), faisant partie d'un ensemble d'arbres sciés (TJ1) destinés à être déplacés, par rapport à l'emplacement de chaque bras de déplacement (2), les informations reçues du capteur de mesure (13 ; 13a) servant à commander les fonctions de rotation des bras de déplacement (2 ; 2⁵, 2⁶, 2⁷) munis des dispositifs de rotation indépendants (8 ; 8⁵, 8⁶, 8⁷).

2. Dispositif de transfert selon la revendication 1, **caractérisé en ce qu'**au moins certains des bras de déplacement (2 ; 2¹, 2², 2³, 2⁴, 2⁶, 2⁷) de la fourche de transfert (1) sont équipés de convoyeurs séparés (41¹, 41²,..., 41⁶, 41⁷) spécifiques de ceux-ci et d'unités motrices(42¹, 42²,..., 42⁶, 42⁷) pour entraîner les convoyeurs, convoyeurs par lesquels chaque bras de déplacement de la fourche de transfert reçoit une instruction pour se déplacer dans le sens longitudinal (C-C) des bras de déplacement, de la première position (D) à la seconde position (E) et inversement.

3. Dispositif de transfert selon la revendication 1, **caractérisé en ce qu'**au moins certains des bras de déplacement (2 ; 2¹, 2², 2³, 2⁴, 2⁶, 2⁷) de la fourche de transfert (1) sont équipés de convoyeurs séparés (41¹, 41²,..., 41⁶, 41⁷) spécifiques de ceux-ci, qui sont équipés d'une unité motrice commune (42 ; 42a), grâce à quoi lesdits bras de déplacement de la fourche de transfert reçoivent une instruction pour se déplacer dans le sens longitudinal (C-C) des bras de déplacement, de la première position (D) à la seconde position (E) et inversement.

4. Dispositif de transfert selon la revendication 3, **caractérisé en ce qu'**entre chaque convoyeur séparé (41¹, 41²,..., 41⁶, 41⁷) et l'unité motrice commune (42 ; 42a) se trouve un dispositif de découplage (45).

5. Dispositif de transfert selon l'une quelconque des revendications précédentes, **caractérisé en ce que** le segment de bras de déplacement (2 ; 2⁵, 2⁶, 2⁷), équipé du dispositif de rotation indépendant spécifique (8 ; 8⁵, 8⁶, 8⁷), est disposé à une seconde extrémité (1b) de la fourche de transfert (1), tandis que les autres bras de déplacement (2 ; 2¹, 2², 2³, 2⁴) , qui sont munis d'un dispositif de rotation commun (7 ; 71, 72) pour la rotation conjointe de ceux-ci, sont disposés à une première extrémité (1a) de la fourche de transfert (1).

6. Dispositif de transfert selon l'une quelconque des revendications précédentes, **caractérisé en ce que** le dispositif de rotation indépendant (8 ; 8⁵, 8⁶, 8⁷) se présente sous la forme d'un cylindre de fluide, de préférence surtout un vérin hydraulique (81).

7. Dispositif de transfert selon l'une quelconque des revendications précédentes, **caractérisé en ce** le capteur de mesure (13) se présente sous la forme d'une caméra (13a).

8. Procédé pour faire fonctionner un dispositif de transfert, ledit dispositif de transfert servant à manipuler des arbres ou analogues sciés, ledit dispositif de transfert comportant une fourche de transfert (1) qui comprend un ensemble de bras de déplacement adjacents (2 ; 2¹, 2²,..., 2⁶, 2⁷) espacés les uns des autres, et dispositif dans lequel la fourche de transfert est amenée à fonctionner dans un sens longitudinal (C-C) des bras de déplacement, passant d'une première position (D) à une seconde position (E) et inversement, ladite fourche de transfert permettant de déplacer un ou plusieurs arbres parallèles sciés (T ; TJ1) d'une première position (A), depuis un convoyeur d'alimentation (9) ou autre, à une seconde position (B), et les bras de déplacement (2 ; 2¹, 2²,..., 2⁶, 2⁷) de ladite fourche de transfert pouvant tourner dans un plan transversal par rapport au sens longitudinal (C-C) et comprenant au moins deux surfaces sensiblement planes (22, 23) à même orientation que le bras de déplacement, qui, dans une direction latérale, forment un angle (α) l'une par rapport à l'autre, et la première (22) desdites surfaces étant lisse tandis que la seconde (23) est rugueuse, **caractérisé en ce qu'**au moins certains des bras de déplacement (2) de la fourche de transfert (1) sont conçus pour tourner sous l'action de dispositifs de rotation indépendants (8), de façon qu'un bras de déplacement puisse tourner dans un plan transversal par rapport au sens longitudinal, indépendamment des autres bras de déplacement et la fourche de transfert (1) est équipée d'un ou de plusieurs capteurs de mesure (13 ; 13a) servant à détecter la position d'une extrémité (p) de l'arbre scié (T), faisant partie d'un ensemble d'arbres sciés (TJ1) destinés à être déplacés, par rapport à l'emplacement de chaque bras de déplacement (2), les informations reçues du capteur de mesure (13 ; 13a) servant à commander les fonctions de rotation des bras de déplacement (2 ; 2⁵, 2⁶, 2⁷) munis des dispositifs de rotation indépendants (8 ; 8⁵, 8⁶, 8⁷).

9. Procédé selon la revendication 8 pour faire fonctionner un dispositif de transfert, **caractérisé en ce qu'**au moins certains des bras de déplacement (2 ; 2¹, 2², 2³, 2⁴, 2⁶, 2⁷) de la fourche de transfert (1) sont aptes à être déplacés, indépendamment d'autres bras de déplacement, par un convoyeur séparé (41¹, 41², ..., 41⁶, 41⁷) et par une unité motrice (42¹, 42²,..., 42⁶, 42⁷) entraînant celui-ci, dans le sens longitudinal (C-C) des bras de déplacement, de la première position (D) à la seconde position (E) et inversement.
